# EUROPEAN PATENT APPLICATION

(11) **EP 4 831 508 A1**
(43) Date of publication of application: **28.10.2026**
(21) Application number: 26174901.4
(22) Date of filing: 27.04.2026
(51) Int. Cl.: F16H 1/28, F02C 7/32

(54) **PLANETARY GEAR ARRANGEMENT**

(30) Priority: 25.04.2025 US 202519189373
(71) Applicant: Pratt & Whitney Canada Corp., Longueuil, Québec J4G 1A1 (CA)
(72) Inventor: KARBOWIAK, Slawomir, (01BE5) Longueuil, J4G 1A1 (CA); ROZPUTYNSKI, Tomasz, (01BE5) Longueuil, J4G 1A1 (CA); KESEK, Mateusz, (01BE5) Longueuil, J4G 1A1 (CA)
(74) Representative: Dehns

(57) **Abstract**

A planetary gear arrangement (32) includes a sun gear (34), a ring gear (36) arranged around the sun gear (34), and a plurality of planet gears (40) positioned between the sun gear (34) and the ring gear (36) and engaged with the sun gear (34) and the ring gear (36), the plurality of planet gears (40) rotatably fixed to a planet carrier (42). A planet gear (40) includes a planet gear opening (46) via which the planet gear (40) is fixed to the planet carrier (42). A planet gear rim (66) includes one or more planet gear recesses (68) formed therein. A planet gear sleeve (54) is positioned in the planet gear opening (46) with a press fit between a planet gear sleeve outer surface (56) and a planet gear opening radial surface (58). One of a diameter of the planet gear sleeve outer surface (56) or a planet gear opening radial surface (58) varies along their respective axial lengths relative to an axial direction of a planet gear (40) central axis (11).

## Description

### BACKGROUND

Exemplary embodiments pertain to the art of aircraft systems, and in particular to a planetary gear arrangement of a gearbox of an aircraft engine system.

Such planetary gear arrangements are utilized to reduce a rotational speed between the turbomachinery and a fan/propeller/output shaft of the system, depending on the engine type. In a planetary gearbox system, journal-type bearings are utilized in planet gears to achieve mass reduction, enhance reliability at high speeds, and simplify the overall design.

Journal bearings are designed with specialized coatings that reduce the friction coefficient and provide support under low-lubrication conditions. However, due to cost constraints or the limited size of planet gears, the coating cannot be always directly applied to the gear's inner diameter. Instead, it is put onto a separate bearing sleeve, which is subsequently press-fitted into the planet gear.

To prevent relative motion between the bearing sleeve and the planet gear (sleeve spinning), a high-interference fit is required. Interference fit between the planet gear and the bearing sleeve induces tensile a hoop stress at gear teeth fillet of the planet gear. Due to torque transmitted within gearbox, the bending of gear teeth generates a fillet bending stress, which reaches its peak at a side of the teeth under misalignment conditions. The durability of the planet gears is limited by the combined fillet stress of tight-fit hoop stress and fillet bending stress in the gear teeth.

### BRIEF DESCRIPTION

According to a first aspect of the invention, a planetary gear arrangement includes a sun gear, a ring gear arranged around the sun gear, and a plurality of planet gears positioned between the sun gear and the ring gear and engaged with the sun gear and the ring gear, the plurality of planet gears rotatably fixed to a planet carrier. A planet gear of the plurality of planet gears includes a planet gear opening via which the planet gear is fixed to the planet carrier. A planet gear rim of the planet gear includes one or more planet gear recesses formed therein. A planet gear sleeve is positioned in the planet gear opening with a press fit between a planet gear sleeve outer surface and a planet gear opening radial surface. One of a diameter of the planet gear sleeve outer surface or a planet gear opening radial surface varies along their respective axial lengths relative to an axial direction of a planet gear central axis.

In an embodiment of the above, a diameter of the planet gear sleeve outer surface is lesser at an axial center of the planet gear sleeve than at an axial end of the planet gear sleeve.

In an embodiment of any of the above, the planet gear sleeve outer surface extends curvilinearly at a constant radius in the axial direction between opposing axial ends of the planet gear sleeve.

In an embodiment of any of the above, a diameter of the planet gear opening radial surface is greater at an axial center of the planet gear opening than at an axial end of the planet gear opening.

In an embodiment of any of the above, the planet gear opening radial surface extends curvilinearly at a constant radius along the axial direction between opposing axial ends of the planet gear opening.

In an embodiment of any of the above, the one or more planet recesses each have an axial recess depth greater than a radial recess width.

In an embodiment of any of the above, the one or more planet recesses includes a first planet recess at a first axial side of the planet gear rim and a second planet recess at a second axial side of the planet gear rim.

In an embodiment of any of the above, a bushing is installed into the planet gear sleeve.

In an embodiment of any of the above, a mechanical fastener extends through a planet carrier opening in the planet carrier and the bushing to secure the planet gear to the carrier.

In an embodiment of any of the above, a friction reducing coating is applied to a radially inner sleeve surface of the planet gear sleeve.

According to another aspect of the invention, a gas turbine engine system includes a gas turbine engine, and a gearbox operably connected to the gas turbine engine. The gearbox is configured to extract energy from the gas turbine engine and includes an output shaft rotatable about a shaft axis. The output shaft is configured to connect to one or more auxiliary components. A planetary gear arrangement is operably connected to the output shaft. The planetary gear arrangement includes a sun gear, a ring gear arranged around the sun gear, and a plurality of planet gears positioned between the sun gear and the ring gear and engaged with the sun gear and the ring gear, the plurality of planet gears rotatably fixed to a planet carrier. A planet gear of the plurality of planet gears includes a planet gear opening via which the planet gear is fixed to the planet carrier. A planet gear rim of the planet gear includes one or more planet gear recesses formed therein. A planet gear sleeve is positioned in the planet gear opening with a press fit between a planet gear sleeve outer surface and a planet gear opening radial surface. One of a diameter of the planet gear sleeve outer surface or a planet gear opening radial surface varies along their respective axial lengths relative to an axial direction of a planet gear central axis.

In an embodiment of the above, a diameter of the planet gear sleeve outer surface is lesser at an axial center of the planet gear sleeve than at an axial end of the planet gear sleeve.

In an embodiment of any of the above, the planet gear sleeve outer surface extends curvilinearly at a constant radius in the axial direction between opposing axial ends of the planet gear sleeve.

In an embodiment of any of the above, a diameter of the planet gear opening radial surface is greater at an axial center of the planet gear opening than at an axial end of the planet gear opening.

In an embodiment of any of the above, the planet gear opening radial surface extends curvilinearly at a constant radius along the axial direction between opposing axial ends of the planet gear opening.

In an embodiment of any of the above, the one or more planet recesses each have an axial recess depth greater than a radial recess width.

In an embodiment of any of the above, the one or more planet recesses includes a first planet recess at a first axial side of the planet gear rim and a second planet recess at a second axial side of the planet gear rim.

In an embodiment of any of the above, a bushing is installed into the planet gear sleeve.

In an embodiment of any of the above, a mechanical fastener extends through a planet carrier opening in the planet carrier and the bushing to secure the planet gear to the carrier.

In an embodiment of any of the above, the output shaft is operably connected to one of the sun gear and the planet carrier.

### BRIEF DESCRIPTION OF THE DRAWINGS

The following descriptions should not be considered limiting in any way. With reference to the accompanying drawings, like elements are numbered alike:
FIG. 1 is a schematic cross-sectional view of an embodiment of a gas turbine engine;
FIG. 2 is a schematic illustration of an exemplary planetary gear arrangement of an accessory gearbox of a gas turbine engine;
FIG. 3 is a cross-sectional view of an embodiment of a planet gear and planet carrier interface of a planetary gear arrangement;
FIG. 4 is a cross-sectional view of an exemplary embodiment of a planet gear opening; and
FIG. 5 is a cross-sectional view of an exemplary embodiment of a planet gear sleeve.

### DETAILED DESCRIPTION

A detailed description of one or more embodiments of the disclosed apparatus and method are presented herein by way of exemplification and not limitation with reference to the Figures.

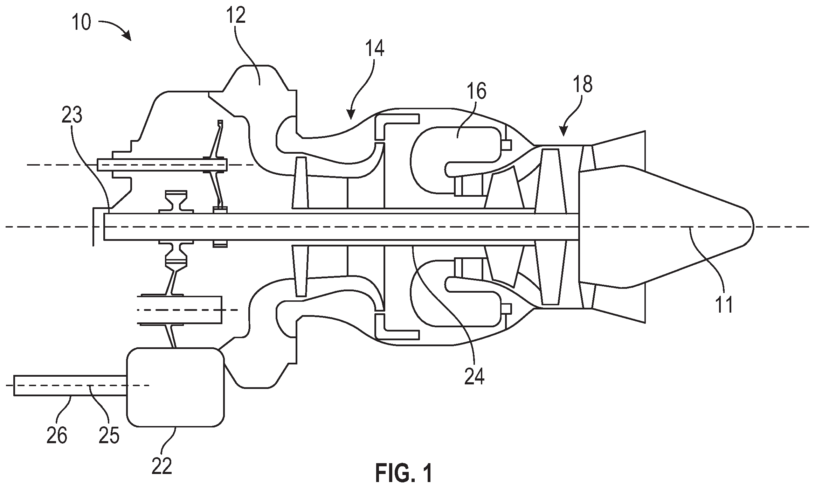

FIG.1 illustrates a gas turbine engine 10 of a type preferably provided for use in subsonic flight, generally comprising in serial flow communication an inlet 12 through which ambient air enters the gas turbine engine 10, a compressor section 14 for pressurizing the air, a combustor 16 in which the compressed air is mixed with fuel and ignited for generating an annular stream of hot combustion gases, and a turbine section 18 for extracting energy from the combustion gases. The compressor section 14, and the turbine section 18 are rotatable about a central axis 11 of the engine 10.

A low pressure shaft 23 is drivingly connected to low pressure rotor(s) of the turbine section 18, and the high pressure rotor(s) of the compressor section 14 is/are drivingly connected to high pressure rotor(s) of the turbine section 18 through a high pressure shaft 24 concentrically surrounding the low pressure shaft 23.

The gas turbine engine 10 includes a gear box 22 operably connected to an output shaft 26, which in some embodiments rotates about a shaft axis 25 offset from the central axis 11. The output through shaft 26 is, in some embodiments operably connected to, for example, a main rotor gearbox at a first end of the output through shaft 26 and a tail rotor gearbox at a second end of the output through shaft 26. In the illustrated embodiment, the output through shaft 26 is operably connected to and driven by the low pressure shaft 23, but one skilled in the art will appreciate that in other embodiments, the output through shaft 26 may be connected to an driven by the high pressure shaft 24. The output shaft 26 may be operably connected to, for example, a fan, a propeller or a rotor to drive rotation thereof.

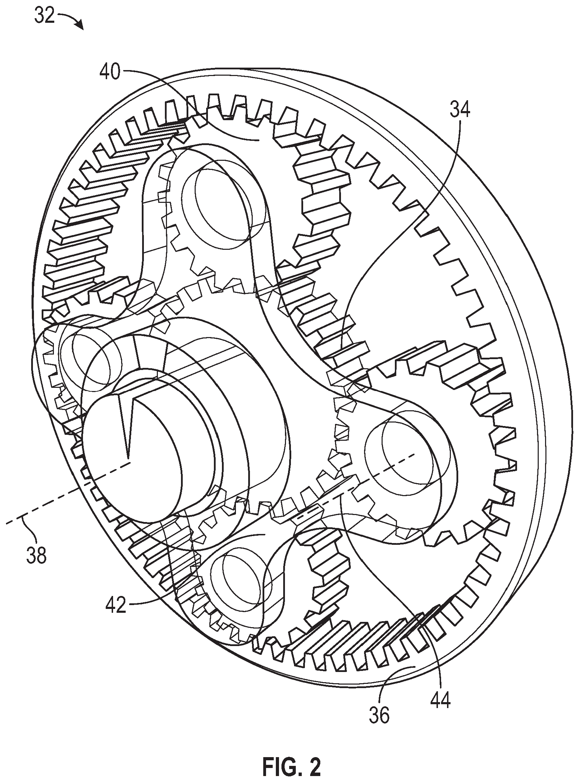

Referring now to FIG. 2, the gearbox 22 includes a planetary gear arrangement 32 to transfer rotational energy from, for example, the low pressure shaft 23 to the output shaft 26. The planetary gear arrangement 32 includes a sun gear 34 and a ring gear 36 surrounding the sun gear 34, with a plurality of planet gears 40 are positioned between the sun gear 34 and the ring gear 36 and are meshed with the sun gear 34 and the ring gear 36. The planet gears 40 are each rotatably mounted on a planet carrier 42, with each of the planet gears 40 configured to rotate about their respective planet gear axes 44. In one embodiment, the ring gear 36 is rotationally fixed, while the sun gear 34 and the planet carrier 42 with the planet gears 40 are configured to rotate about the planetary gear central axis 38. In some embodiments, one of the sun gear 34 and the ring gear 36 is operably connected to the output shaft 26 to drive rotation of the output shaft 26.

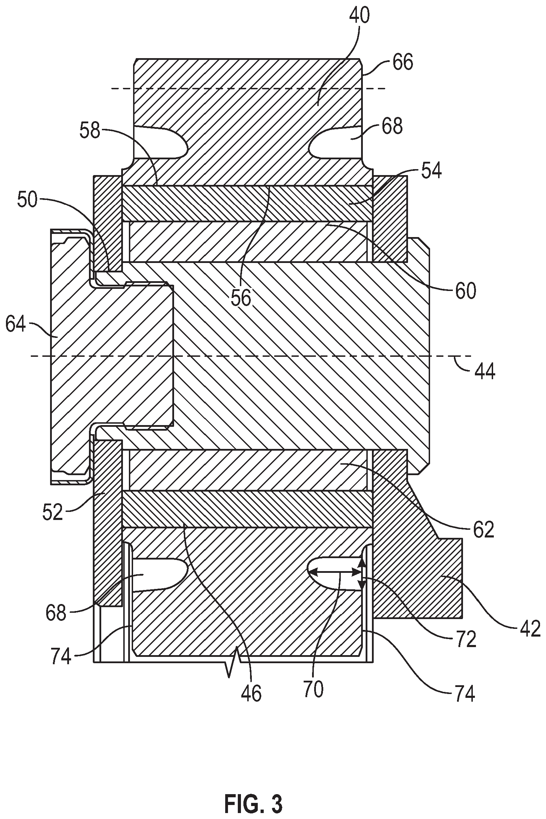

Referring now to FIG. 3, illustrated is an exemplary cross-sectional view of a connection of a planet gear 40 to the planet carrier 42. The planet gear 40 includes a planet gear opening 46 located at the planet gear axis 44, and the planet carrier 42 similarly includes a planet carrier opening 50 located at the planet gear axis 44. In some embodiments, the planet carrier opening 50 has a smaller effective diameter than the planet gear opening 46, such that a planet carrier flange 52 of the planet carrier 42 overlaps with the planet gear opening 46. A planet gear sleeve 54 is installed into the planet gear opening 46 such that a radially outer sleeve surface 56 of the planet gear sleeve 54 has a press-fit or tight fit to a radial planet opening surface 58 of the planet gear opening 46. In some embodiments, a radially inner sleeve surface 60 of the planet gear sleeve 54 has a friction reducing coating applied thereto. A bushing 62 is installed into the planet gear sleeve 54 and together with the planet gear sleeve 54 defines a journal bearing to support the planet gear 40 at the planet carrier 42. A mechanical fastener, such as a pin 64 is installed to the planet carrier opening 50 to retain the planet gear 40 to the planet carrier 42. In some embodiments, the planet carrier flange 52 at least partially overlaps the planet gear sleeve 54 and the bushing 62.

To reduce hoop stresses of the planet gear 40, a planet gear rim 66 radially outboard of the planet gear opening 46 includes one or more recesses 68 or side cuts formed in the planet gear rim 66. The recesses 68 extend axially into the planet gear 40 to a recess depth 70 and have a radial recess width 72. In some embodiments, the recess depth 70 is greater than the recess width 72. In the embodiment of FIG. 3, the recesses 68 are formed on each axial rim side 74 of the planet gear rime 66, while in other embodiments the recesses 68 may be formed on only one axial rim side 74. As a result of introducing the recesses 68, tensile hoop stresses at the planet gear 40 sides is reduced and combined stress at a gear tooth fillet of the planet gear 40 is also reduced.

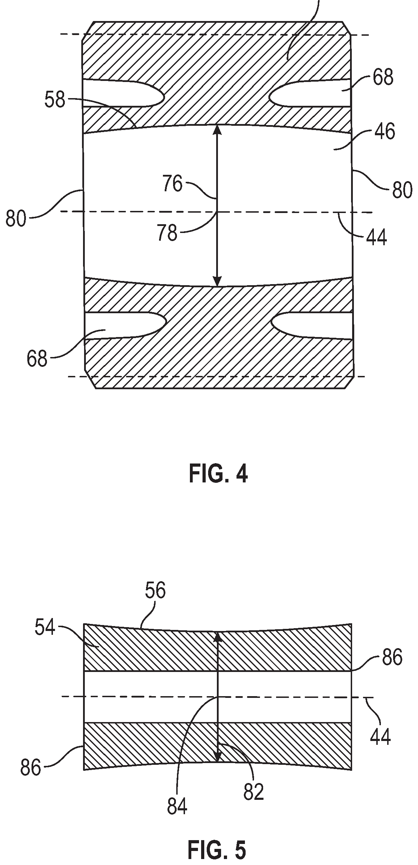

Due to the inclusion of the planet rim recesses 68, one of the planet gear sleeve 54 and the planet gear opening 46 is shaped to maintain a desired distribution of the tight fit of the components. To achieve this, one or more of the radially outer sleeve surface 56 and the radial planet opening surface 58 are shaped such that the respective diameters of the planet gear opening 46 and/or the planet gear sleeve 54 varies along an axial length of the planet gear opening 46 and/or gear sleeve 54. For example, as illustrated in FIG. 4, in some embodiments the radial planet opening surface 58 is curvilinear in the axial direction along the planet gear axis 44 such that a planet gear opening diameter 76 is greater at an axial center 78 of the planet gear opening 46 than at each axial end 80 of the planet gear opening 46. In some embodiments, the radial planet opening surface 58 extends in a constant radius along the axial direction, while in other embodiments, the radius of curvature of the radial planet opening surface 58 may vary along the axial length. Further, while a curvilinear radial planet opening surface 58 is described and illustrated herein, one skilled in the art will readily appreciate that in other embodiments, the radial planet opening surface 58 may extend linearly, for example, along a portion of the axial length between the axial ends 78 of the planet gear opening 46.

Alternatively, in other embodiments as illustrated in FIG. 5, the radially outer sleeve surface 56 of the planet gear sleeve 54 is curvilinear in the axial direction along the planet gear axis 44 such that a sleeve outer diameter 82 of the planet gear sleeve 54 is lower at an axial center 84 of the planet gear sleeve 54 than at each axial end 86 of the planet gear sleeve 54. In some embodiments, the radially outer sleeve surface 56 extends in a constant radius along the axial direction, while in other embodiments the radius of curvature of the radially outer sleeve surface 56 may vary along the axial length. Further, while a curvilinear radially outer sleeve surface 56 is described and illustrated herein, in other embodiments the radially outer sleeve surface 56 may extend linearly, for example, along a portion of the axial length between the axial ends 86 of the planet gear sleeve 54.

Utilizing the planet gear opening 46 configuration of, for example, FIG. 4 or the planet gear sleeve 54 configuration of, for example, FIG. 5 maintains contact pressure between the planet gear opening 46 and the planet gear sleeve 54 necessary to maintain a desired distribution of the tight fit between the radially outer sleeve surface 56 of the planet gear sleeve 54 and the radial planet opening surface 58 of the planet gear 40. These configurations reduce hoop stresses at the axial ends by presence of the planet gear recesses 68. This side reduced hoop stress with the pure bending stress results in reduction of combined (total) stress at side of the teeth, where worst stress under misalignment conditions is expected. While the configurations of FIG. 4 and FIG. 5 are described herein as independent of one another, one skilled in the art will readily appreciate that the planet gear opening 46 of FIG. 4 and the planet gear sleeve 54 configuration of FIG. 5 may also be utilized in combination.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A planetary gear arrangement (32), comprising:
a sun gear (34);
a ring gear (36) arranged around the sun gear (34); and
a plurality of planet gears (40) disposed between the sun gear (34) and the ring gear (36) and engaged with the sun gear (34) and the ring gear (36), the plurality of planet gears (40) rotatably fixed to a planet carrier (42), wherein:
a planet gear (40) of the plurality of planet gears (40) includes a planet gear opening (46) via which the planet gear (40) is fixed to the planet carrier (42);
a planet gear rim (66) of the planet gear (40) includes one or more planet gear recesses (68) formed therein;
a planet gear sleeve (54) is disposed in the planet gear opening (46) with a press fit between a planet gear sleeve outer surface (56) and a planet gear opening radial surface (58); and
a diameter of the planet gear sleeve outer surface (56) and/or a diameter of a planet gear opening radial surface (58) varies along their respective axial lengths relative to an axial direction of a planet gear central axis (11).

2. The planetary gear arrangement (32) of claim 1, wherein a diameter of the planet gear sleeve outer surface (56) is lesser at an axial center (84) of the planet gear sleeve (54) than at an axial end (86) of the planet gear sleeve (54).

3. The planetary gear arrangement (32) of claim 2, wherein the planet gear sleeve outer surface (56) extends curvilinearly, at a constant radius of curvature, in the axial direction between opposing axial ends (86) of the planet gear sleeve (54).

4. The planetary gear arrangement (32) of any preceding claim, wherein a diameter of the planet gear opening radial surface (58) is greater at an axial center (78) of the planet gear opening (46) than at an axial end (80) of the planet gear opening (46).

5. The planetary gear arrangement (32) of claim 4, wherein the planet gear opening radial surface (58) extends curvilinearly, at a constant radius of curvature, along the axial direction between opposing axial ends (80) of the planet gear opening (46).

6. The planetary gear arrangement (32) of any preceding claim, wherein the one or more planet gear recesses (68) each have an axial recess depth (70) greater than a radial recess width (72).

7. The planetary gear arrangement (32) of any preceding claim, wherein the one or more planet gear recesses (68) includes a first planet recess at a first axial side of the planet gear rim (66) and a second planet recess at a second axial side of the planet gear rim (66).

8. The planetary gear arrangement (32) of any preceding claim, further comprising a bushing (62) installed into the planet gear sleeve (54).

9. The planetary gear arrangement (32) of claim 8, further comprising a mechanical fastener extending through a planet carrier opening (50) in the planet carrier (42) and the bushing (62) to secure the planet gear (40) to the carrier.

10. The planetary gear arrangement (32) of any preceding claim, further comprising a friction reducing coating applied to a radially inner sleeve surface (60) of the planet gear sleeve (54).

11. A gas turbine engine system, comprising:
a gas turbine engine (10); and
a gearbox (22) operably connected to the gas turbine engine (10), the gearbox (22) configured to extract energy from the gas turbine engine (10), the gearbox (22) including:
an output shaft (26) rotatable about a shaft axis (25), the output shaft (26) configured to connect to one or more auxiliary components; and
the planetary gear arrangement (32) of any preceding claim operably connected to the output shaft (26).

12. The gas turbine engine (10) system of claim 11, wherein the output shaft (26) is operably connected to the sun gear (34) or the planet carrier (42).
